# EUROPEAN PATENT APPLICATION

(11) **EP 4 746 110 A2**
(43) Date of publication of application: **20.05.2026**
(21) Application number: 25215707.8
(22) Date of filing: 13.11.2025
(51) Int. Cl.: H01M 10/42, H01M 50/213, H01M 50/284, H01M 50/296, H01M 50/519

(54) **PRINTED CIRCUIT BOARD CONNECTOR FOR BATTERY PACK**

(30) Priority: 15.11.2024 IN 202411088488
(71) Applicant: Schneider Electric IT Corporation, Foxboro, MA 02035 (US)
(72) Inventor: ANEKAL VENKATARAMANAPPA, Dileep, BANGALORE (IN); PADIKKAT RAMACHANDRAN, Rakesh, BANGALORE (IN)
(74) Representative: Lavoix

(57) **Abstract**

The present invention relates to a battery pack, comprising: an enclosure; a first battery supported by the enclosure, the first battery including a first terminal and a second terminal; a second battery supported by the enclosure and proximate to the first battery, the second battery including a third terminal and a fourth terminal; and a printed circuit board including a first connector coupled to the first terminal, a second connector coupled to the second terminal, a third connector coupled to the third terminal, and a fourth connector coupled to the fourth terminal.

## Description

### BACKGROUND OF THE DISCLOSURE

### 1. Field of Disclosure

This invention relates generally to batteries used in power systems, and more particularly to a cable-less printed circuit board (PCB) connector that is configured to connect multiple batteries to one another within a battery pack.

### 2. Discussion of Related Art

Battery packs, such as lead-acid and lithium-ion battery packs, may be used in various applications, including uninterruptible power supply (UPS) applications. The battery packs may provide backup power to the UPS. A lead-acid battery is a type of rechargeable battery that can be configured to supply high surge currents. Lead-acid batteries, along with their low cost, are particularly suitable for use in products requiring high current. Since lead-acid batteries are less expensive as compared to newer technologies, e.g., lithium-ion batteries, they are widely used even when surge current is not important and other designs could provide higher energy densities. Multiple batteries provided within the battery pack can be connected in series or parallel connection. When the batteries are connected in series, voltage (V) may be increased. When the batteries are connected in parallel, Ampere hour (Ah) capacity may be increased. When configuring the batteries with series connection, each battery should have the same capacity rating, whereas when configuring batteries with parallel connection, each battery should have the same voltage. The series and parallel connections of multiple battery packs within the UPS are generally done through cables.

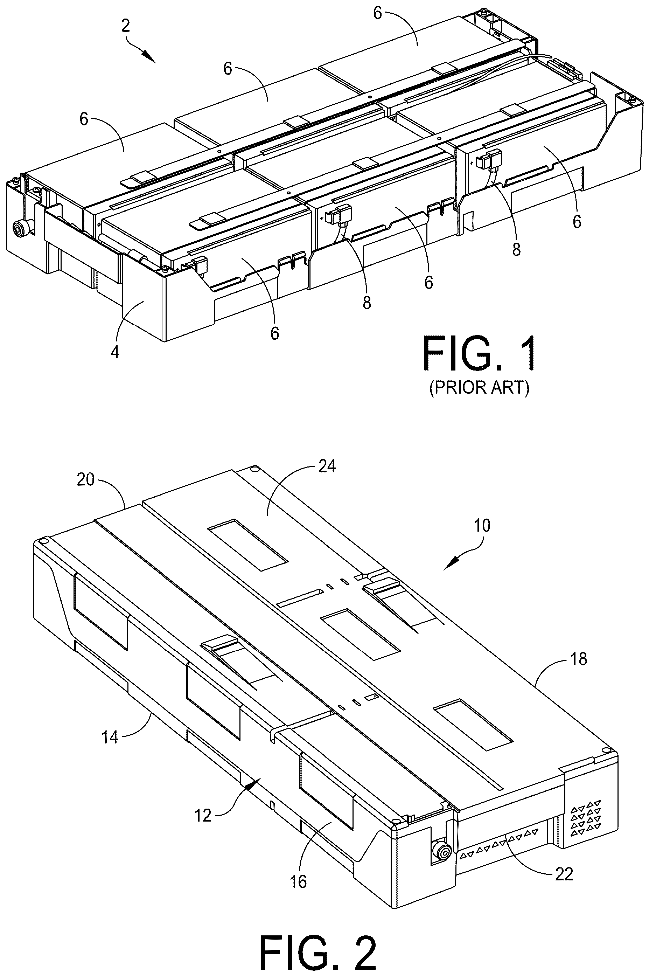

FIG 1 illustrates a traditional battery pack, generally indicated at 2, including an enclosure 4 and multiple batteries, each indicated at 6, disposed within the enclosure 4. Adjacent batteries 6 are connected to one another by cables, each indicated at 8, with the batteries 6 being shown connected in series. The cables 8 take up unwanted space within the enclosure 4, and for high-power batteries, require even larger cables to transmit the increased power provided by the high-power batteries. Thermistors can be provided on the tops of the batteries 6 to measure temperatures of the batteries 6.

### SUMMARY OF THE DISCLOSURE

One aspect of the present disclosure is directed to a battery pack comprising an enclosure, a first battery supported by the enclosure, and a second battery supported by the disclosure. The first battery includes a first terminal and a second terminal. The second battery includes a third terminal and a fourth terminal. The battery pack further comprises a printed circuit board including a first connector coupled to the first terminal, a second connector coupled to the second terminal, a third connector coupled to the third terminal, and a fourth connector coupled to the fourth terminal.

Embodiments of the battery pack further may include a third battery supported by the enclosure and proximate to the second battery, the third battery including a fifth terminal and a sixth terminal. The printed circuit board further may include a fifth connector coupled to the fifth terminal and a sixth connector coupled to the sixth terminal. The battery pack further may include an interface board supported by the enclosure and proximate to the third battery. The interface board may be configured to be connected to the printed circuit board. The printed circuit board further may include a wire-to-board connector. The third battery may extend from the second battery to the second end of the enclosure. The battery pack further may include a fourth battery, a fifth battery, and a sixth battery, each supported by the enclosure. The third battery, the second battery, and the third battery may extend from the first end to the second end of the enclosure. The battery pack further may include a interface board supported by the enclosure and proximate to the second battery. The interface board may be configured to be connected to the printed circuit board. The printed circuit board further may include a wire-to-board connector. The printed circuit board may be configured to transmit power from the first battery to the second battery. The printed circuit board further may be configured to detect a temperature change in each of the first battery and the second battery. The enclosure may be a rectangular-cuboid structure having a first end at the one end of the enclosure and a second end at the opposite end of the enclosure. The first battery and the second battery may extend from the first end to the second end of the enclosure. The first terminal of the first battery and the third terminal of the second battery may be positive terminals and the second terminal of the first battery and the fourth terminal of the second battery may be negative terminals.

Another aspect of the present disclosure is directed to a method of assembling a battery pack. In one embodiment, the method comprises: providing an enclosure; positioning a first battery within the enclosure, the first battery including a first terminal and a second terminal; positioning a second battery within the enclosure and proximate to the first battery, the second battery including a third terminal and a fourth terminal; and coupling a printed circuit board to the first terminal and the second terminal of the first battery and to the third terminal and the fourth terminal of the second battery.

Embodiments of the method further may include coupling a first connector of the printed circuit board to the first terminal, coupling a second connector to the second terminal, coupling a third connector to the third terminal, and coupling a fourth connector to the fourth terminal. The method further may include positioning a third battery within the enclosure and proximate to the second battery. The third battery may include a fifth terminal and a sixth terminal. The method further may include coupling the printed circuit board to the fifth terminal and the sixth terminal of the third battery. The printed circuit board further may include a fifth connector coupled to the fifth terminal and a sixth connector coupled to the sixth terminal. The method further may include positioning an interface board within the enclosure and proximate to the third battery. The interface board may be configured to be coupled to the printed circuit board. The printed circuit board further may include a wire-to-board connector configured to be connected to the interface board. The method further may include positioning an interface board within the enclosure and proximate to the second battery. The interface board may be configured to be coupled to the printed circuit board. The printed circuit board further may include a wire-to-board connector configured to be connected to the interface board. The printed circuit board may be configured to transmit power from the first battery to the second battery. The printed circuit board further may be configured to detect a temperature change in each of the first battery and the second battery.

Yet another aspect of the present disclosure is directed to a power system comprising an uninterruptible power supply and a battery pack coupled to the power supply. The battery pack includes an enclosure, a first battery supported by the enclosure, and a second battery supported by the enclosure. The first battery includes a first terminal and a second terminal. The second battery includes a third terminal and a fourth terminal. The battery pack further includes a printed circuit board including a first connector coupled to the first terminal, a second connector coupled to the second terminal, a third connector coupled to the third terminal, and a fourth connector coupled to the fourth terminal.

Embodiments of the power system further may include configuring the battery pack with a third battery supported by the enclosure and proximate to the second battery. The third battery may include a fifth terminal and a sixth terminal. The printed circuit board further may include a fifth connector coupled to the fifth terminal and a sixth connector coupled to the sixth terminal. The power system further may include an interface board supported by the enclosure and proximate to the third battery. The interface board may be configured to be coupled to the printed circuit board. The printed circuit board further may include a wire-to-board connector configured to be connected to the interface board. The third battery may extend from the second battery to the second end of the enclosure. The power system further may include a fourth battery, a fifth battery, and a sixth battery, each supported by the enclosure. The third battery, the second battery, and the third battery may extend from the first end to the second end of the enclosure. The power system further may include an interface board supported by the enclosure and proximate to the second battery. The interface board may be configured to be coupled to the printed circuit board. The printed circuit board further may include a wire-to-board connector configured to be connected to the interface board. The printed circuit board may be configured to transmit power from the first battery to the second battery. The printed circuit board further may be configured to detect a temperature change in each of the first battery and the second battery. The enclosure may be a rectangular-cuboid structure having a first end at the one end of the enclosure and a second end at the opposite end of the enclosure. The first battery and the second battery may extend from the first end to the second end of the enclosure. The first terminal of the first battery and the third terminal of the second battery may be positive terminals and the second terminal of the first battery and the fourth terminal of the second battery may be negative terminals.

### BRIEF DESCRIPTION OF THE DRAWINGS

Various aspects of at least one embodiment are discussed below with reference to the accompanying figures, which are not intended to be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or nearly identical component that is illustrated in various figures is represented by a like numeral. For purposes of clarity, not every component may be labeled in every figure. In the figures:
FIG. 1 is a perspective view of a known battery pack configuration including cables to connect batteries of the battery pack;
FIG. 2 is a perspective view of a battery pack of an embodiment of the present disclosure;
FIG. 3 is a perspective view of the battery pack with a cover removed to reveal an interior of the battery pack;
FIG. 4 is a perspective view of a battery used in the battery pack;
FIG. 5 is a cross-sectional view of an uninterruptible power supply (UPS) including two battery packs;
FIG. 6 is a perspective view of the battery pack with the cover and three batteries removed to illustrate a printed circuit board connector used to couple batteries to one another;
FIG. 7A is a plan view of the printed circuit board connector;
FIG. 7B is a top view of the printed circuit board connector;
FIG. 7C is a cross-sectional view of the printed circuit board connector;
FIG. 8A is a perspective view of three batteries removed from an enclosure of the battery pack, with the printed circuit board connector being shown in a pre-connected position;
FIG. 8B is a perspective view of the three batteries shown in FIG. 8A, with the printed circuit board being shown in a connected position;
FIG. 9 is a side view showing the connection of the printed circuit board connector with a battery of the battery pack;
FIG. 10 is a perspective view of the battery pack with the cover removed showing another printed circuit board connector used to couple three additional batteries to one another;
FIG. 11 is an exploded perspective view of the battery pack showing the printed circuit board connectors used to couple batteries to one another; and
FIG. 12 is a perspective view of the battery pack showing the printed circuit board connector coupled to an interface board of the battery pack.

### DETAILED DESCRIPTION OF THE DISCLOSURE

Aspects of the present disclosure are directed to an improved battery pack, specifically a lead-acid battery pack, which is capable of providing high surge currents at a relatively low cost. Multiple batteries within the battery pack can be connected in series or in parallel. A printed circuit board (PCB) connector is provided to connect batteries within the battery pack. The use of the printed circuit board connector enables a reduction in width of the battery pack. Moreover, the printed circuit board connector while being configured to transmit power from battery to battery further can be configured to detect a temperature change in each of the first battery and the second battery. The printed circuit board connector can be sized to accommodate increased currents, e.g., up to 100 A.

In certain embodiments, the battery pack includes a first battery having two terminals, e.g., a first terminal and a second terminal, and a second battery having two terminals, e.g., a third terminal and a fourth terminal, that is connected to a first connector, a second connector, a third connector, and a fourth connector of a printed circuit board, respectively. The battery pack further includes an interface board having two terminals, e.g., a fifth terminal and a sixth terminal, that is connected to a fifth connector and a sixth connector of the printed circuit board, respectively.

This disclosure is not limited in its application to the details of construction and the arrangement of components set forth in the following descriptions or illustrated by the drawings. The disclosure is capable of other embodiments and of being practiced or of being carried out in various ways. Also, the phraseology and terminology used herein is for description purposes and should not be regarded as limiting. The use of "including," "comprising," "having," "containing," "involving," and variations herein, are meant to be open-ended, i.e., "including but not limited to."

Referring to the drawings, and more particularly to FIG. 2, a battery pack of the present disclosure is generally indicated at 10. In the shown embodiment, the battery pack 10 includes an enclosure, generally indicated at 12, which is configured to support components of the battery pack. The enclosure 12 is a generally rectangular-cuboid structure that is shaped and sized to be inserted within a UPS to provide battery power to the UPS. In one embodiment, the enclosure 12 includes a bottom 14, two relatively long sides 16, 18, two relatively short ends 20, 22, and a top or cover 24. The shape and size of the enclosure 12 can be tailored to the intended use of the battery pack 10 within the UPS. The enclosure 12 is preferably fabricated from a rigid material having high stiffness and strength. In some embodiments, the enclosure 12 can be fabricated from steel or aluminum, or a suitable lightweight, rigid material, such as carbon fiber-reinforced plastic (CFRP) or glass fiber reinforced plastic (GFRP).

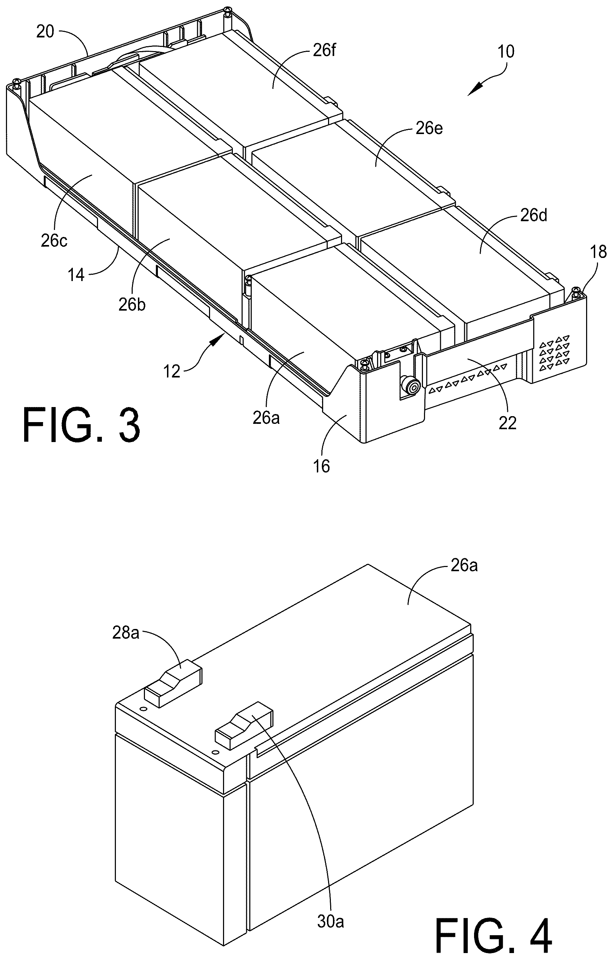

Referring to FIG. 3, the battery pack 10 further includes several batteries, indicated at 26a, 26b, 26c, 26d, 26e, 26f, which are supported by the enclosure 12. The batteries 26a, 26b, 26c, 26d, 26e, 26f are arranged within the enclosure 12 with three batteries 26a, 26b, 26c arranged in a first row and three batteries 26d, 26e, 26f arranged in a second row. It should be understood that any number of batteries can be provided within the enclosure 12 depending on the size, shape and orientation of the battery pack 10. For example, the battery pack 10 can be configured with four batteries arranged within the enclosure 12 with two batteries arranged in a first row and two batteries arranged in a second row. Other configurations are further contemplated.

FIG. 4 illustrates an exemplary battery, e.g., battery 26a, which includes a first terminal 28a and a second terminal 30a. In the shown embodiment, the first terminal 28a is a positive terminal and the second terminal 30a is a negative terminal. The remaining batteries 26b, 26c, 26d, 26e, 26f each include two terminals, indicated at 28b, 28c, 28d, 28e, 28f and 30b, 30c, 30d, 30e, 30f, respectively. For example, the second battery 26b includes a third terminal 28b (positive) and fourth terminal 30b (negative), the third battery 26c includes a fifth terminal 28c (positive) and a sixth terminal 30c (negative), and so on. Each battery 26a, 26b, 26c, 26d, 26e, 26f is placed within the enclosure 12 such that the terminals of the battery extend along a vertical surface along a side of the battery. Each battery 26a, 26b, 26c, 26d, 26e, 26f further includes multiple battery cells, which are configured to store power. In some embodiments, the battery cells can be lead-acid battery cells, and in other embodiments, the battery cells can be lithium-ion battery cells.

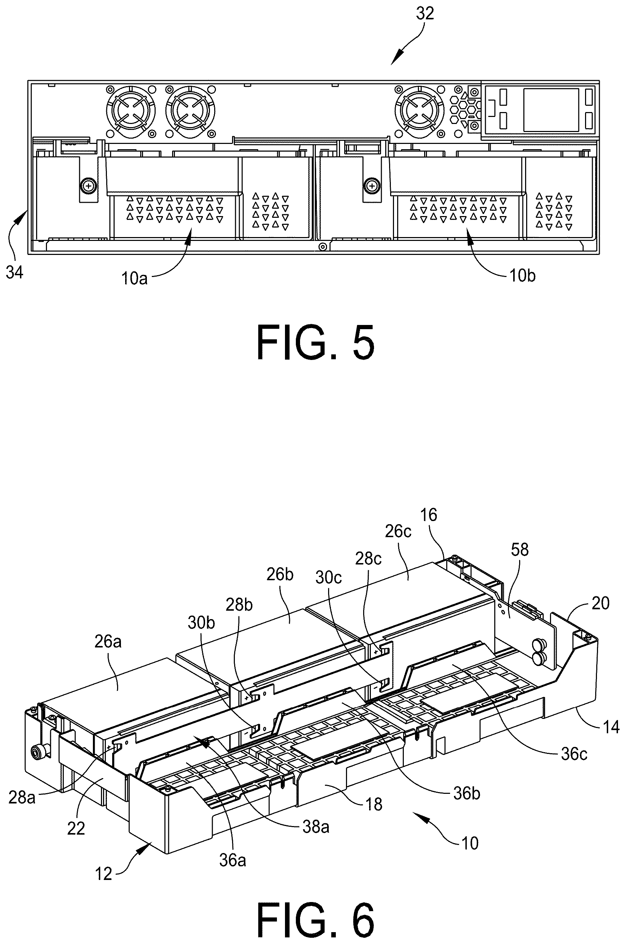

Referring to FIG. 5, two battery packs 10a, 10b are shown within a UPS, generally indicated at 32. As shown, the UPS 32 includes a chassis 34 configured to receive the battery packs 10a, 10b in side-by-side relation. As shown, the chassis 34 is a rectangular-cuboid structure that is shaped and sized to fit within a mounting slot, such as a mounting slot of an IT equipment rack. In one embodiment, the chassis 34 has a thickness, i.e., a distance between a top and a bottom of the chassis 34, of 3 rack unit (U), which is known to be 5.25 inches (1 U = 1.75 inches). The interior of the chassis 34 of the UPS 32 is configured to support the internal components of the UPS 32, including operational components of the UPS, the battery packs 10a, 10b, and a controller configured to control the operation of the UPS 32. The UPS 32 further includes one or more connectors provided to connect the UPS 32 to an external battery and to electrical components supported by the IT equipment rack, e.g., servers. The battery packs 10a, 10b provide back-up power to the UPS 32. The battery packs 10a, 10b each have a thickness of 2 U, i.e., 3.5 inches.

Referring to FIG. 6, three batteries 26a, 26b, 26c are disposed within the enclosure 12 to of the battery pack 10 create the first row described above. The batteries 26a, 26b, 26c are arranged lengthwise within the enclosure 12, with the terminals 28a, 30a, 28b, 30b, 28c, 30c of each battery being positioned on the lefthand side of the enclosure, as shown. The batteries 26d, 26e, 26f on the righthand side of the enclosure 12 are removed for illustration purposes. The bottom 14 of the enclosure 12 includes several vertical wall portions 36a, 36b, 36c to maintain the batteries 26a, 26b, 26c along a side of the enclosure 12. As shown, the vertical wall portions 36a, 36b, 36c extend vertically from the bottom 14 of the enclosure 12, and are positioned to separate batteries 26a, 26b, 26c from batteries 26d, 26e, 26f, respectively. As will be described in greater detail below, the batteries 26a, 26b, 26c are connected to one another, either in series or in parallel, to provide surge power to a load. Similarly, the batteries 26d, 26e, 26f are connected to one another, in series or in parallel, and may be combined with batteries 26a, 26b, 26c to provide power to a load.

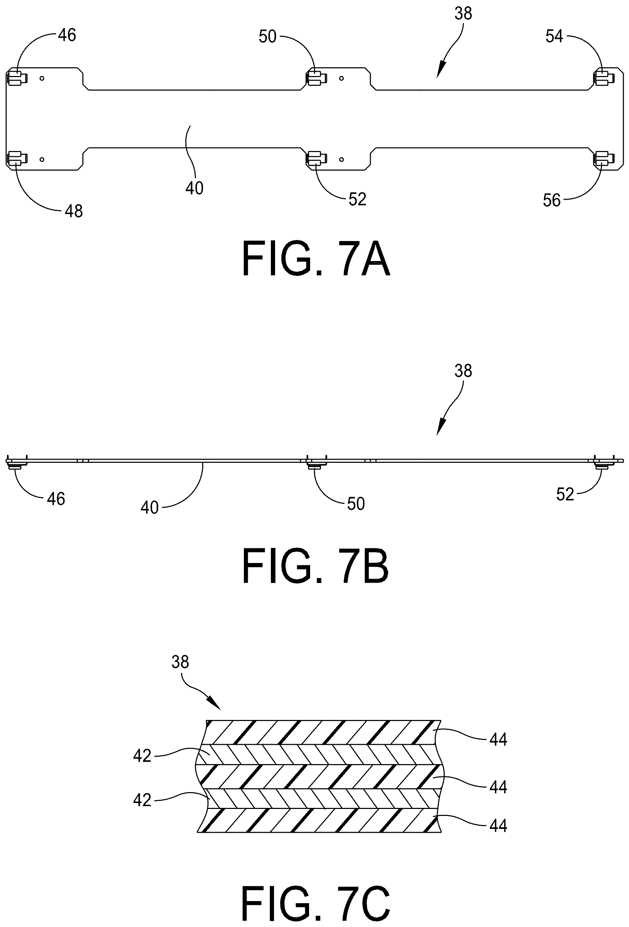

Referring additionally to FIGS. 7A-7C, embodiments of the present disclosure are directed to a printed circuit board connector, generally indicated at 38, which is sometimes referred to as a printed circuit board. As best shown in FIG. 7A, the printed circuit board connector 38 includes an elongated body 40 fabricated from a printed circuit board. As shown in FIG. 7C, the printed circuit board connector 38 includes alternating insulating (dielectric) layers, each indicated at 42, and conductive layers, each indicated at 44. Although three insulating layers 42 and two conductive layers 44 are shown, it should be understood that the elongated body 40 of the printed circuit board connector 38 can be fabricated from any desired number of layers.

The elongated body 40 is contoured to fit around the wall portions, e.g., wall portions 36a, 36b, during use. One (first) conductive layer 44 may be provided to transmit current through the printed circuit board connector 38. The thickness (mass) of the conductive layer 44 may be selected to achieve a desired amperage of current between the batteries 26a, 26b, 26c. In some embodiments, the conductive layer 44 may be sized to accommodate 100 A of current. The other (second) conducive layer 44 may be provided with a pattern of traces, planes and other features that are etched from the conductive layer 44 to perform other functions, such as detecting a temperature change within each battery 26a, 26b, 26c.

FIG. 7A shows the elongated body 40 of the printed circuit board connector 38 including a first connector 46, a second connector 48, a third connector 50, a fourth connector 52, a fifth connector 54, and a sixth connector 56. Connectors 46, 48, 50, 52, 54, 56 are configured to be releasably secured to terminals 28a, 28b, 28c, 28d, 28e, 28f in the manner described below. For example, each connector 46, 48, 50, 52, 54, 56 can embody a quick connector type of connector. The number and positioning of the connectors of the printed circuit board connector can be selected based on the number of batteries and the positioning of the terminals on the batteries to be connected by the printed circuit board connector.

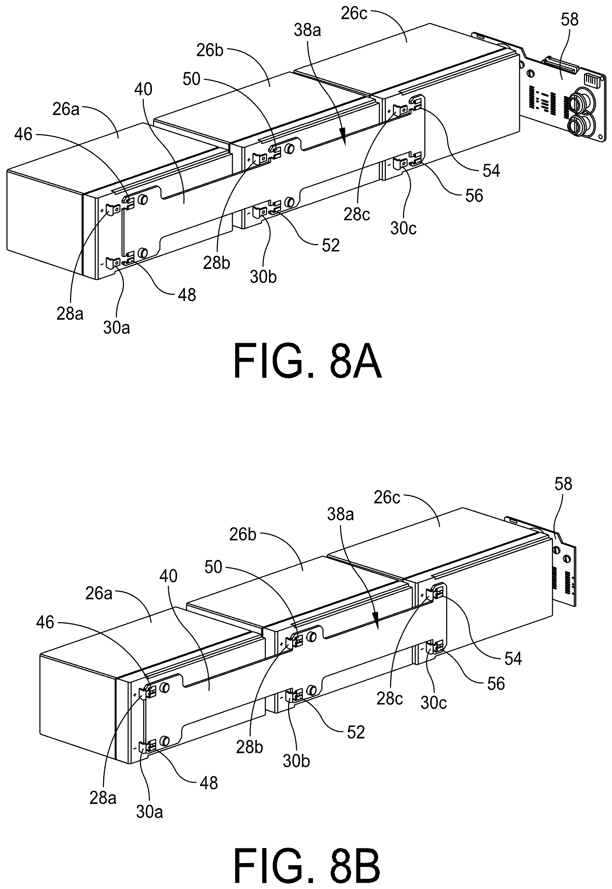

With reference to FIGS. 8A and 8B, the printed circuit board connector 38a is shown in a pre-connected position (FIG. 8A) and in a connected position (FIG. 8B). The first connector 46 and the second connector 48 are configured to be secured or otherwise coupled to the first terminal 28a and the second terminal 30a of the first battery 26a, respectively, the third connector 50 and the fourth connector 52 are configured to be secured or otherwise coupled to the third terminal 28b and the fourth terminal 30b of the second battery 26b, respectively, and the fifth connector 54 and the sixth connector 56 are configured to be secured or otherwise coupled to the fifth terminal 28c and the sixth terminal 30c of the third battery 26c, respectively. The manner in which each connector 46, 48, 50, 52, 54, 56 is connected to its respective terminal 28a, 30a, 28b, 30b, 28c, 30c is by sliding each connector over its respective terminal.

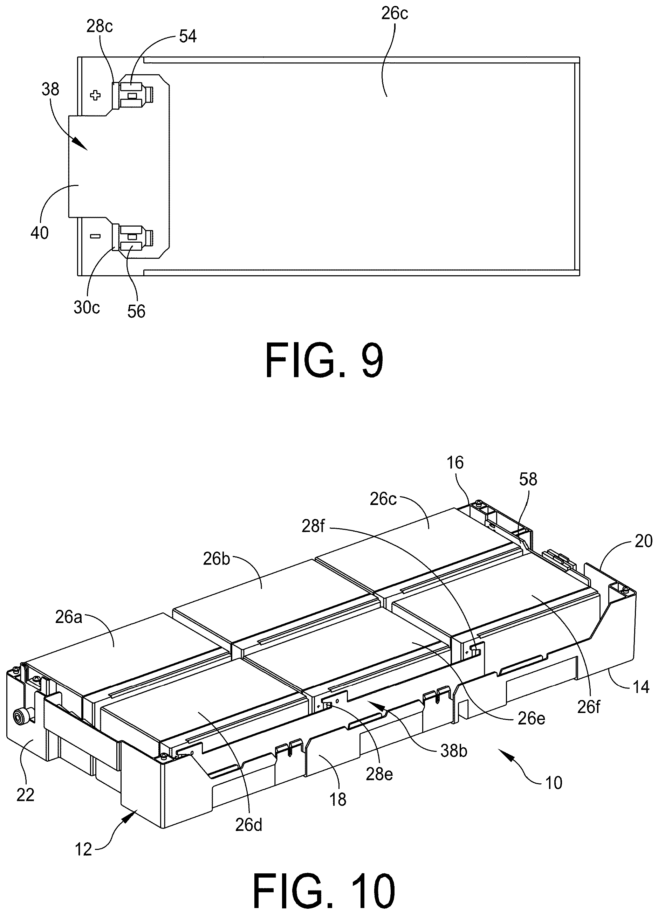

FIG. 9 illustrates the connection of fifth connector 54 and the sixth connector 56 secured to the fifth terminal 28c and the sixth terminal 30c of the third battery 26c. As noted, the connectors 46, 48, 50, 52, 54, 56 each embody a quick connector type of connector, which is configured to slide onto its respective terminal. Other suitable connectors can be used in place of a quick connector type of connector.

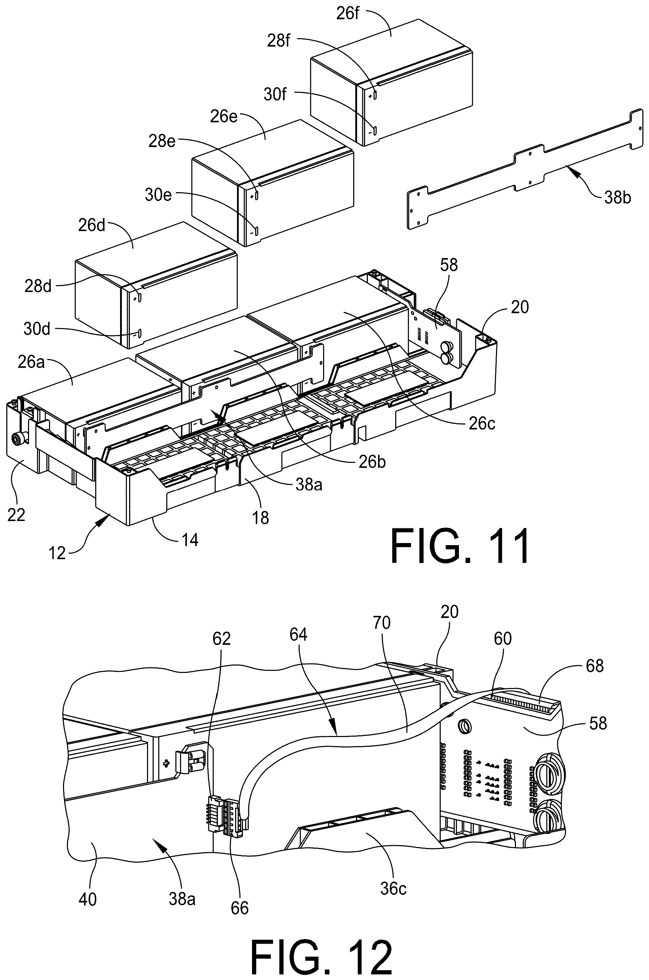

Referring to FIGS. 10 and 11, the batteries 26d, 26e, 26f forming the second row of batteries are installed within the enclosure 12 of the battery pack 10. The batteries 26d, 26e, 26f are installed in a manner similar to batteries 26a, 26b, 26c of the first row of batteries such that battery 26d is positioned next to battery 26a, battery 26e is positioned next to battery 26b, and battery 26f is positioned next to battery 26c. Wall portion 36a separates batteries 26a, 26d, wall portion 36b separates batteries 26b, 26e, and wall portion 36c separates batteries 26c, 26f. The wall portions 36a, 36b, 36c, along with the sides 16, 18 and the ends 20, 22 of the enclosure 12 are configured to hold the batteries 26a, 26b, 26c, 26d, 26e, 26f in place and prevent lateral movement of the batteries within the enclosure 12. The bottom 14 and the top 24 of the enclosure 12 engage the batteries 26a, 26b, 26c, 26d, 26e, 26f to prevent the up-and-down movement of the batteries within the enclosure 12.

As shown, another printed circuit board connector 38b is provided to couple the terminals of the batteries 26d, 26e, 26f to one another. The manner in which the connectors 46, 48, 50, 52, 54, 56 of the printed circuit board connector 38b is connected to the terminals of the batteries 26d, 26e, 26f is the same as the connection of the connection of the connectors 46, 48, 50, 52, 54, 56 of the printed circuit board connector 38b to the terminals of batteries 26a, 26b, 26c. Specifically, the first connector 46 and the second connector 48 are configured to be secured or otherwise coupled to the first terminal 28d and the second terminal 30d of the fourth battery 26d, respectively, the third connector 50 and the fourth connector 52 are configured to be secured or otherwise coupled to the third terminal 28e and the fourth terminal 30e of the fifth battery 26e, respectively, and the fifth connector 54 and the sixth connector 56 are configured to be secured or otherwise coupled to the fifth terminal 28f and the sixth terminal 30f of the sixth battery 26f, respectively. FIG. 10 illustrates the printed circuit board connector 38b coupled to the fourth battery 26d, the fifth battery 26e, and the sixth battery 26f to connect the batteries to one another, either in series (preferred) or in parallel.

Referring additionally to FIG. 12, the battery pack 10 further includes an interface board 58 supported by the enclosure 12. As shown, the interface board 58 is secured to an end, e.g., end 20, of the enclosure 12 within the interior of the enclosure 12. The interface board 58 may be part of a battery management system (BMS), and is configured to enable the BMS to communicate with other systems and components of the UPS 32. The interface board 58 includes a wire-to-board connector 60 provided along a top edge of the interface board 58. The interface board 58 further may include additional connectors and/or terminals to connect the interface board 58 with other components of the UPS. When employing lithium-ion batteries, the interface board 58 may be configured with a communication protocol to share information about the batteries 26a, 26b, 26c, 26d, 26e, 26f, including each battery's state of charge, temperature and voltage. The interface board 58 can be coupled with a controller of the UPS 32.

In some embodiments, the printed circuit board connector 38a further may include a wire-to-board connector 62 provided at an end of the body 40 of the printed circuit board connector 38a. In the shown embodiment, the interface board 58 is proximate to batteries 26c, 26f. A connector cable, generally indicated at 64, is provided to connect the printed circuit board connector 38a to the interface board 58. As shown, the connector cable 64 includes a first mating wire-to-board connector 66, a second wire-to-board connector 68, and a flexible cable 70 connecting the first mating wire-to-board connector 66 to the second wire-to-board connector 68. The arrangement is such that the first mating wire-to-board connector 66 is connected and secured to the wire-to-wire connector 62 of the printed circuit board connector 38 and the second mating wire-to-board connector 68 is connected and secured to the wire-to-wire connector 60 of the interface board 58. Although not shown, the interface board 58 may include two additional wire-to-board connectors to connect to wire-to-board connectors provided on the other printed circuit board connector 38b. Further, other types of connectors can be used in place of the wire-to-board connectors disclosed herein.

As noted above, the printed circuit board connector 38a is configured to transmit power from the first battery, battery 26a, to the second battery, battery 26b, and from the second battery, battery 26b, to the third battery, battery 26c. When employing lithium-ion batteries, the printed circuit board connector 38a further is configured to detect aspects of the batteries, including a temperature change in each of battery 26a , battery 26b and battery 26c, and communicate information to the interface board 58. Other aspects can be detected as well, including state of charge and voltage.

Similarly, the other printed circuit board connector 38b is configured to transmit power from the fourth battery, battery 26d, to the fifth battery, battery 26e, and from the fifth battery, battery 26e, to the third battery, battery 26f. When employing lithium-ion batteries, the other printed circuit board connector 38b further is configured to detect aspects of the batteries, including a temperature change in each of battery 26d , battery 26e and battery 26f, and communicate information to the interface board 58. Other aspects can be detected as well, including state of charge and voltage.

In some embodiments, referring back to FIG. 5, the battery packs 10a, 10b, in addition to embodying replacement battery cartridges for the UPS 32, can also embody external batteries for the UPS 32. The external batteries can be connected to the UPS 32 to provide external battery power to the UPS 32. In the event of mains power failure, the external batteries can be configured to provide power to the UPS for a period of time.

A method of assembling a battery pack 10 includes providing the enclosure 12, positioning battery 26a within the enclosure 12, and positioning battery 26b within the enclosure 12 so that the battery 26b is proximate to the battery 26a. The method further includes coupling the first connector 46 and the second connector 48 of the printed circuit board connector, e.g., printed circuit board connector 38a, to the first terminal 28a and the second terminal 30a of battery 26a, respectively and coupling the third connector 50 and the fourth connector 52 of the printed circuit board connector 38a to the third terminal 28b and the fourth terminal 30b of battery 26b, respectively. The method further includes positioning battery 26c within the enclosure 12 and proximate to the battery 26b and coupling the fifth connector 54 and the sixth connector 56 of the printed circuit board connector 38a to the fifth terminal 28c and the sixth terminal 30c of battery 26c, respectively. The first row of batteries 26a, 26b, 26c are properly installed within the enclosure 12. The method further includes installing the second row of batteries 26d, 26e, 26f in a similar manner.

The method further may include positioning the interface board 58 within the enclosure 12 and proximate to battery 26c, and coupling the seventh connector 64 and the eighth connector 66 of the printed circuit board connector 38a to the seventh terminal 60 and the eighth terminal 62 of the interface board 58, respectively. The first row of batteries 26a, 26b, 26c are properly connected to the interface board 58. The method further includes connecting the second row of batteries 26d, 26e, 26f in a similar manner.

Thus, it should be observed that the battery pack of aspects of the present disclosure achieves several benefits including, but not limited to, reducing the footprint of the battery pack and resolving a problem of the batteries sliding within the enclosure. Further, the battery pack can accommodate increased current, up to 100 A. The printed circuit board connector reduces stress on the battery terminals since the batteries can be tightly packed within the enclosure. Since there are no cables, assembly time is reduced. The provision of a single printed circuit board connector eliminates the need for a separate thermistor board provided on the tops of the batteries.

Various controllers may execute various operations discussed above, including the operation of the controller of the UPS 32. Using data stored in associated memory and/or storage, the controller also executes one or more instructions stored on one or more non-transitory computer-readable media, which the controller may include and/or be coupled to, that may result in manipulated data. In some examples, the controller may include one or more processors or other types of controllers. In one example, the controller is or includes at least one processor. In another example, the controller performs at least a portion of the operations discussed above using an application-specific integrated circuit tailored to perform particular operations in addition to, or in lieu of, a general-purpose processor. As illustrated by these examples, examples in accordance with the present disclosure may perform the operations described herein using many specific combinations of hardware and software and the disclosure is not limited to any particular combination of hardware and software components. Examples of the disclosure may include a computer-program product configured to execute methods, processes, and/or operations discussed above. The computer-program product may be, or include, one or more controllers and/or processors configured to execute instructions to perform methods, processes, and/or operations discussed above.

The present disclosure may also relate to the following embodiments:
Embodiment 1. A battery pack, comprising:
   an enclosure;
   a first battery supported by the enclosure, the first battery including a first terminal and a second terminal;
   a second battery supported by the enclosure and proximate to the first battery, the second battery including a third terminal and a fourth terminal; and
   a printed circuit board including
      a first connector coupled to the first terminal,
      a second connector coupled to the second terminal,
      a third connector coupled to the third terminal, and
      a fourth connector coupled to the fourth terminal.
Embodiment 2. The battery pack of embodiment 1, further comprising a third battery supported by the enclosure and proximate to the second battery, the third battery including a fifth terminal and a sixth terminal.
Embodiment 3. The battery pack of embodiment 2, wherein the printed circuit board further includes a fifth connector coupled to the fifth terminal and a sixth connector coupled to the sixth terminal.
Embodiment 4. The battery pack of embodiment 3, further comprising an interface board supported by the enclosure and proximate to the third battery, the interface board being configured to be connected to the printed circuit board.
Embodiment 5. The battery pack of embodiment 4, wherein the printed circuit board further includes a wire-to-board connector.
Embodiment 6. The battery pack of embodiment 2, wherein the third battery extends from the second battery to the second end of the enclosure.
Embodiment 7. The battery pack of embodiment 6, further comprising a fourth battery, a fifth battery, and a sixth battery, each supported by the enclosure, the third battery, the second battery, and the third battery extending from the first end to the second end of the enclosure.
Embodiment 8. The battery pack of embodiment 1, further comprising an interface board supported by the enclosure and proximate to the second battery, the interface board being configured to be connected to the printed circuit board.
Embodiment 9. The battery pack of embodiment 8, wherein the printed circuit board further includes a wire-to-board connector.
Embodiment 10. The battery pack of embodiment 1, wherein the printed circuit board is configured to transmit power from the first battery to the second battery.
Embodiment 11. The battery pack of embodiment 10, wherein the printed circuit board further is configured to detect a temperature change in each of the first battery and the second battery.
Embodiment 12. The battery pack of embodiment 1, wherein the enclosure is a rectangular-cuboid structure having a first end at the one end of the enclosure and a second end at the opposite end of the enclosure, the first battery and the second battery extending from the first end to the second end of the enclosure.
Embodiment 13. The battery pack of embodiment 1, wherein the first terminal of the first battery and the third terminal of the second battery are positive terminals and the second terminal of the first battery and the fourth terminal of the second battery are negative terminals.
Embodiment 14. A method of assembling a battery pack, the method comprising:
   providing an enclosure;
   positioning a first battery within the enclosure, the first battery including a first terminal and a second terminal;
   positioning a second battery within the enclosure and proximate to the first battery, the second battery including a third terminal and a fourth terminal; and
   coupling a printed circuit board to the first terminal and the second terminal of the first battery and to the third terminal and the fourth terminal of the second battery.
Embodiment 15. The method of embodiment 14, wherein the printed circuit board includes a first connector coupled to the first terminal, a second connector coupled to the second terminal, a third connector coupled to the third terminal, and a fourth connector coupled to the fourth terminal.
Embodiment 16. The method of embodiment 15, further comprising positioning a third battery within the enclosure and proximate to the second battery, the third battery including a fifth terminal and a sixth terminal, and coupling the printed circuit board to the fifth terminal and the sixth terminal of the third battery.
Embodiment 17. The method of embodiment 16, wherein the printed circuit board further includes a fifth connector coupled to the fifth terminal and a sixth connector coupled to the sixth terminal.
Embodiment 18. The method of embodiment 17, further comprising positioning an interface board within the enclosure and proximate to the third battery, the interface board being configured to be coupled to the printed circuit board.
Embodiment 19. The method of embodiment 18, wherein the printed circuit board further includes a wire-to-board connector configured to be connected to the interface board.
Embodiment 20. The method of embodiment 15, wherein the printed circuit board is configured to transmit power from the first battery to the second battery and to detect a temperature change in each of the first battery and the second battery.
Embodiment 21. A power system, comprising:
   an uninterruptible power supply; and
   a battery pack coupled to the power supply, the battery pack including
      an enclosure,
      a first battery supported by the enclosure, the first battery including a first
   terminal and a second terminal,
      a second battery supported by the enclosure and proximate to the first battery, the
   second battery including a third terminal and a fourth terminal, and
      a printed circuit board including
      a first connector coupled to the first terminal,
      a second connector coupled to the second terminal,
      a third connector coupled to the third terminal, and a fourth connector coupled to the fourth terminal.
Embodiment 22. The power system of embodiment 21, wherein the battery pack further includes a third battery supported by the enclosure and proximate to the second battery, the third battery including a fifth terminal and a sixth terminal.
Embodiment 23. The power system of embodiment 21, wherein the printed circuit board further includes a fifth connector coupled to the fifth terminal and a sixth connector coupled to the sixth terminal.
Embodiment 24. The power system of embodiment 23, further comprising an interface board supported by the enclosure and proximate to the third battery, the interface board being configured to be coupled to the printed circuit board.
Embodiment 25. The power system of embodiment 21, further comprising an interface board supported by the enclosure and proximate to the second battery, the interface board being configured to be coupled to the printed circuit board.
Having thus described several aspects of at least one embodiment, it is to be appreciated various alterations, modifications, and improvements will readily occur to those skilled in the art. Such alterations, modifications, and improvements are intended to be part of this disclosure and are intended to be within the scope of the disclosure. Accordingly, the foregoing description and drawings are by way of example only.

## Claims

1. A battery pack, comprising:
an enclosure;
a first battery supported by the enclosure, the first battery including a first terminal and a second terminal;
a second battery supported by the enclosure and proximate to the first battery, the second battery including a third terminal and a fourth terminal; and
a printed circuit board including
a first connector coupled to the first terminal,
a second connector coupled to the second terminal,
a third connector coupled to the third terminal, and
a fourth connector coupled to the fourth terminal.

2. The battery pack of claim 1, further comprising a third battery supported by the enclosure and proximate to the second battery, the third battery including a fifth terminal and a sixth terminal.

3. The battery pack of claim 2, wherein the printed circuit board further includes a fifth connector coupled to the fifth terminal and a sixth connector coupled to the sixth terminal.

4. The battery pack of claim 3, further comprising an interface board supported by the enclosure and proximate to the third battery, the interface board being configured to be connected to the printed circuit board, wherein, in particular, the printed circuit board further includes a wire-to-board connector.

5. The battery pack of claim 2, wherein the third battery extends from the second battery to the second end of the enclosure, wherein, in particular, the battery pack further comprises a fourth battery, a fifth battery, and a sixth battery, each supported by the enclosure, the third battery, the second battery, and the third battery extending from the first end to the second end of the enclosure.

6. The battery pack of any one of the preceding claims, further comprising an interface board supported by the enclosure and proximate to the second battery, the interface board being configured to be connected to the printed circuit board, wherein, in particular, the printed circuit board further includes a wire-to-board connector.

7. The battery pack of any one of the preceding claims, wherein the printed circuit board is configured to transmit power from the first battery to the second battery, wherein, in particular, the printed circuit board further is configured to detect a temperature change in each of the first battery and the second battery.

8. The battery pack of any one of the preceding claims, wherein the enclosure is a rectangular-cuboid structure having a first end at the one end of the enclosure and a second end at the opposite end of the enclosure, the first battery and the second battery extending from the first end to the second end of the enclosure.

9. The battery pack of any one of the preceding claims, wherein the first terminal of the first battery and the third terminal of the second battery are positive terminals and the second terminal of the first battery and the fourth terminal of the second battery are negative terminals.

10. A power system, comprising:
an uninterruptible power supply; and
a battery pack coupled to the power supply, the battery pack being according to any one of the preceding claims.

11. A method of assembling a battery pack, the method comprising:
providing an enclosure;
positioning a first battery within the enclosure, the first battery including a first terminal and a second terminal;
positioning a second battery within the enclosure and proximate to the first battery, the second battery including a third terminal and a fourth terminal; and
coupling a printed circuit board to the first terminal and the second terminal of the first battery and to the third terminal and the fourth terminal of the second battery.

12. The method of claim 11, wherein the printed circuit board includes a first connector coupled to the first terminal, a second connector coupled to the second terminal, a third connector coupled to the third terminal, and a fourth connector coupled to the fourth terminal.

13. The method of claim 12, further comprising positioning a third battery within the enclosure and proximate to the second battery, the third battery including a fifth terminal and a sixth terminal, and coupling the printed circuit board to the fifth terminal and the sixth terminal of the third battery.

14. The method of claim 13, wherein the printed circuit board further includes a fifth connector coupled to the fifth terminal and a sixth connector coupled to the sixth terminal.

15. The method of claim 14, further comprising positioning an interface board within the enclosure and proximate to the third battery, the interface board being configured to be coupled to the printed circuit board, wherein, in particular, the printed circuit board further includes a wire-to-board connector configured to be connected to the interface board.
